# EUROPEAN PATENT APPLICATION

(11) **EP 4 694 084 A1**
(43) Date of publication of application: **11.02.2026**
(21) Application number: 23930976.8
(22) Date of filing: 28.12.2023
(51) Int. Cl.: H04L 67/02, G06Q 50/00, H04L 51/02

(54) **TRUSTABILITY DETERMINATION PROGRAM, OPERATION TERMINAL, TRUSTABILITY DETERMINATION METHOD, AND INFORMATION PROCESSING SYSTEM**

(30) Priority: 24.03.2023 JP 2023049049
(71) Applicant: FUJITSU LIMITED, Kawasaki-shi, Kanagawa 211-8588 (JP)
(72) Inventor: NAKAMICHI, Koji, Kawasaki-shi, Kanagawa 211-8588 (JP)
(74) Representative: Hoffmann Eitle
(86) International application number: PCT/JP2023/047162
(87) International publication number: WO 2024/202362

(57) **Abstract**

An operation terminal (1) displays specific sent data uploaded on the Internet on a screen, receives endorsement data (41) indicating certainty of the sent data, determines a degree of reliability of the specific sent data with respect to the endorsement data (41) by using an emphasis viewpoint list (31) storing a viewpoint emphasized by a viewer who views the sent data, and displays information indicating the degree of reliability of the specific sent data in a superimposed manner on the screen.

## Description

### Technical Field

The present invention relates to a reliability determination program, an operation terminal, a reliability determination method, and an information processing system.

### Background Art

In recent years, with the spread of smartphones and social networking services (SNS) on the Internet, it is possible to send and browse information regardless of time and place. However, information sent in this manner may include, for example, false or incorrect information that is intentionally spread, and may be spread in some situations.

Therefore, from the viewpoint of suppressing the spread of false information as described above, for example, a mechanism for confirming the certainty of data on the Internet may be used.

For example, "Trustable Internet " has been proposed as an architecture for confirming data certainty (see, for example, Non Patent Literature). The "Trustable Internet" adds information that can be supported as the certainty of the original data by the sender or a third party for the data so that the certainty of the data on the Internet can be easily confirmed. Examples of the information to be added include information on persons and objects involved in data generation, processing, and the like, information on confirmation and evaluation by a third party who has viewed the data, information on a physical space related to the data (sensor data and the like), and the like.

Then, the "Trustable Internet" has an endorsement layer shared between the user and a person who adds information on the Internet hierarchy. As a result, the "Trustable Internet" makes it possible for the user to use the web application as in the conventional case and to confirm the certainty of data.

### Citation List

### Non Patent Literature

Non Patent Literature 1: Trustable Internet "https://tial.sfc.keio.ac.jp/blob/Trustable_Internet_White paper_V1.0.pdf"

### Summary of invention

### Technical Problem

However, there is a problem that the user is not able to easily determine whether or not the data on the Internet is reliable. For example, the user can confirm information added to data on the Internet and determine whether or not the data is reliable. However, the information added to the data on the Internet is not necessarily reliable information for the user.

That is, whether or not the information added to the data is believed varies depending on the user. As an example, whether the user believes the information added to the data changes depending on whether or not the information added to the data is information from a person or an organization trusted by the user. As a result, even if the user confirms the information added to the data on the Internet, the user is not able to easily determine whether or not the data is reliable.

In addition, in a case where a large amount of information is displayed to be added to data on the Internet, it takes time and effort for the user to confirm all the information. As a result, the user is not able to easily determine whether or not the data on the Internet is reliable.

In one aspect, an object of the present invention is to easily determine whether or not data on the Internet is reliable.

### Solution to Problem

In one aspect, a reliability determination program causes a computer to execute processing of displaying, on a screen, specific data uploaded on the Internet, receiving property data indicating certainty of the specific data, determining a degree of reliability of the specific data with respect to the property data using a first storage unit that stores a viewpoint emphasized by a viewer viewing the data, and displaying information indicating the degree of reliability of the specific data on the screen in a superimposed manner.

### Advantageous Effects of Invention

According to one embodiment, a user can easily determine whether or not data on the Internet is reliable.

### Brief Description of Drawings

FIG. 1 is a diagram illustrating an example of a configuration of an information processing system according to an embodiment.
FIG. 2 is a diagram illustrating an example of a flow of reliability determination processing according to the embodiment.
FIG. 3 is a block diagram illustrating an example of a functional configuration of an operation terminal (viewer) according to the embodiment.
FIG. 4 is a diagram illustrating an example of an emphasis viewpoint list according to the embodiment.
FIG. 5 is a diagram illustrating an example of a reliability target list according to the embodiment.
FIG. 6 is a diagram illustrating a screen image of an operation terminal (viewer).
FIG. 7 is a diagram illustrating an example of a flowchart of control processing of the operation terminal (viewer) according to the embodiment.
FIG. 8 is a diagram illustrating an example of a flowchart of reliability determination processing according to the embodiment.
FIG. 9 is a diagram illustrating a modification of the flowchart of the reliability determination processing according to the embodiment.
FIG. 10 is a diagram illustrating an example of a computer that executes a reliability determination program.

### Embodiments for Carrying Out the Invention

Hereinafter, embodiments of a reliability determination program, an operation terminal, and a reliability determination method disclosed in the present application will be described in detail with reference to the drawings. Note that, in the embodiment, the present invention is not limited to the embodiment.

### Embodiment

### <Functional configuration of information processing system>

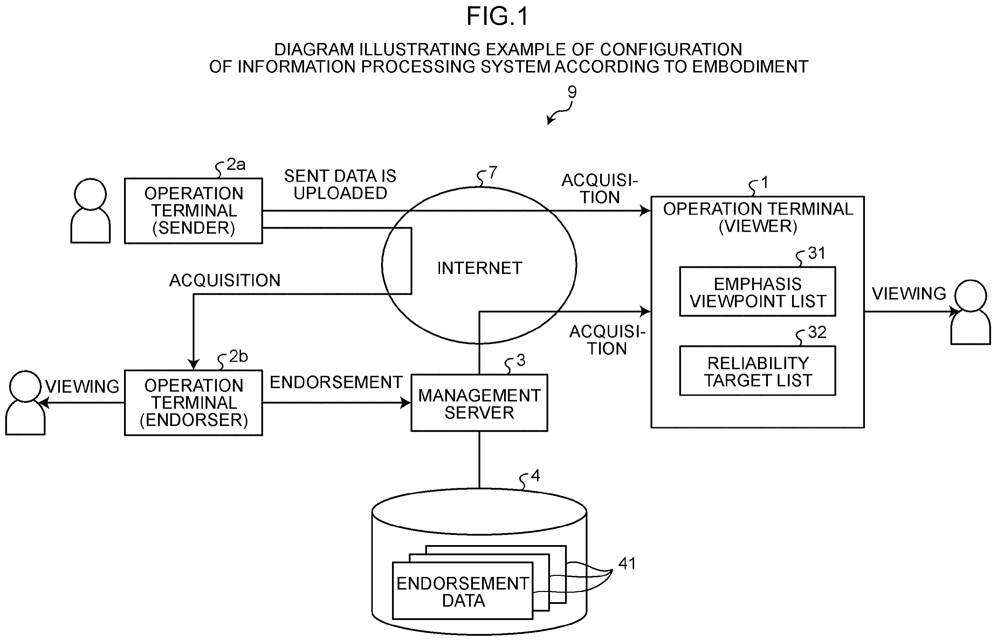

First, a configuration of an information processing system 9 will be described. FIG. 1 is a diagram illustrating an example of a configuration of the information processing system 9 according to an embodiment.

The information processing system 9 illustrated in FIG. 1 includes, for example, an operation terminal (viewer) 1, an operation terminal (sender) 2a, an operation terminal (endorser) 2b, a management server 3, and a storage device 4. Hereinafter, the operation terminal (viewer) 1 is also simply referred to as the operation terminal 1. The operation terminal (sender) 2a is also simply referred to as an operation terminal 2a. The operation terminal (endorser) 2b is also simply referred to as an operation terminal 2b.

The operation terminal 2a is, for example, a terminal owned by a sender who sends data, and is a terminal that the sender uploads sent data to a web server (not illustrated) on Internet 7. Specifically, the operation terminal 2a may be, for example, a smartphone and the like owned by a sender. In addition, the operation terminal 2a can access the operation terminal 1, the operation terminal 2b, and the management server 3 via the Internet 7, for example. Note that the sent data may be, for example, a sentence posted on a social network service (SNS).

The operation terminal 2b is, for example, a terminal owned by an endorser, and is a terminal that performs endorsement and the like of sent data uploaded by a sender to a web server on the Internet 7. The term "endorse" as used herein means that information supported by a person or an object is added to sent data. The added information referred to herein is also referred to as "endorsement data" and is an example of property data. Then, a person or an object that performs endorsement is called an "endorser". That is, the endorser is, for example, a person or an object that generates endorsement data 41, and includes a person other than the endorser and a device that automatically generates the endorsement data 41. Specifically, the operation terminal 2b may be, for example, a smartphone and the like owned by an endorser. In addition, the operation terminal 2b can access the operation terminal 1, the operation terminal 2a, and the management server 3 via the Internet 7, for example.

The storage device 4 is, for example, a hard disk drive (HDD) or a solid state drive (SSD), and stores the endorsement data 41 added by an endorser and the like to the sent data on the Internet 7 uploaded by the sender. In addition, the endorsement data 41 is, for example, information used as a determination criterion when determining the certainty of the content of the sent data. Note that the certainty of data refers to the degree of correctness of data. Specifically, the endorsement data 41 includes information on persons and objects involved in sent data generation, processing, and the like, information on confirmation and evaluation by a third party (endorser) who has viewed the sent data, information on a physical space related to the sent data (sensor data and the like), and the like.

The management server 3 is, for example, one or more physical machines or one or more virtual machines, and performs a processing of managing the endorsement data 41 for the sent data.

Specifically, the management server 3 receives, for example, the endorsement data 41 indicating the certainty of the sent data uploaded onto the Internet 7 and the digital signature generated from the endorsement data 41. Then, for example, the management server 3 stores, in the storage device 4, the endorsement data 41 to which the identification information of the sent data uploaded onto the Internet 7 and the digital signature are added. That is, for example, the management server 3 stores each piece of the endorsement data 41 in a state where a digital signature generated by an endorser who is a generation subject of each piece of the endorsement data 41 is added. As a result, the management server 3 ensures authenticity and non-falsification of each piece of the endorsement data 41.

Then, the management server 3 receives a request for acquiring the specific endorsement data 41 from the operation terminal 1. The acquisition request includes, for example, identification information of the sent data corresponding to the specific endorsement data 41. Then, the management server 3 acquires the specific endorsement data 41 corresponding to the acquisition request from the endorsement data 41 stored in the storage device 4. Then, the management server 3 transmits the acquired specific endorsement data 41 to the operation terminal 1 as a request source. As a result, for example, in a case where the viewer of the operation terminal 1 browses the sent data uploaded on the Internet 7, it is possible to appropriately determine the certainty of the sent data by referring to the endorsement data 41 corresponding to the sent data.

Note that, for example, in a case where another piece of the endorsement data 41 corresponding to a person or an object related to the sent data uploaded onto the Internet 7 is already stored in the storage device 4, the management server 3 may store the endorsement data 41 corresponding to the sent data and the other piece of endorsement data 41 in association with each other. That is, for example, when the management server 3 stores each piece of the endorsement data 41 in the storage device 4, the management server 3 can form a graph structure by associating the endorsement data 41 with another piece of the endorsement data 41 for an endorser who is a generation subject of each piece of the endorsement data 41 or another piece of the endorsement data 41 for an object of the sent data.

The operation terminal 1 is, for example, a terminal owned by a viewer, and performs a reliability determination processing indicating whether or not the sent data uploaded by a sender to a web server on the Internet 7 is reliable. The operation terminal 1 may be, for example, a smartphone and the like owned by a viewer. In addition, the operation terminal 1 can access the management server 3 via the Internet 7, for example.

Specifically, the operation terminal 1 according to the embodiment acquires the sent data uploaded by the sender to a web server on the Internet 7. Then, the operation terminal 1 displays the acquired sent data on the screen. In addition, the operation terminal 1 transmits a request for acquiring the endorsement data 41 for the sent data to the management server 3, and acquires the endorsement data 41 for the sent data from the management server 3. The acquisition request includes, for example, identification information of the sent data.

Then, the operation terminal 1 determines whether or not the sent data is reliable using an emphasis viewpoint list 31 storing viewpoints emphasized by the viewer and a reliability target list 32 storing people or organizations trusted by the viewer with respect to the acquired endorsement data 41. As an example, the operation terminal 1 determines that the sent data is reliable in a case where the endorsement data 41 for the sent data is positive information with respect to the emphasis viewpoint stored in the emphasis viewpoint list 31, and the endorser of the endorsement data 41 is stored in the reliability target list 32. That is, the operation terminal 1 determines that the sent data is reliable for the viewer in a case where the sent data being browsed by the viewer has a positive endorsement by the third party endorser with respect to the viewpoint emphasized by the viewer, and the endorser is a person or an organization trusted by the viewer. Then, the operation terminal 1 displays the determination result in a superimposed manner on a screen for browsing the sent data.

As a result, the viewer can easily determine whether or not the sent data is reliable from the determination result for the sent data, for example. That is, the viewer can quickly determine whether or not the sent data is reliable with respect to the viewpoint (emphasis viewpoint) that the viewer desires to know without checking all the pieces of the endorsement data 41. As a result, the viewer can quickly make a decision (for example, purchase and the like) on the sent data.

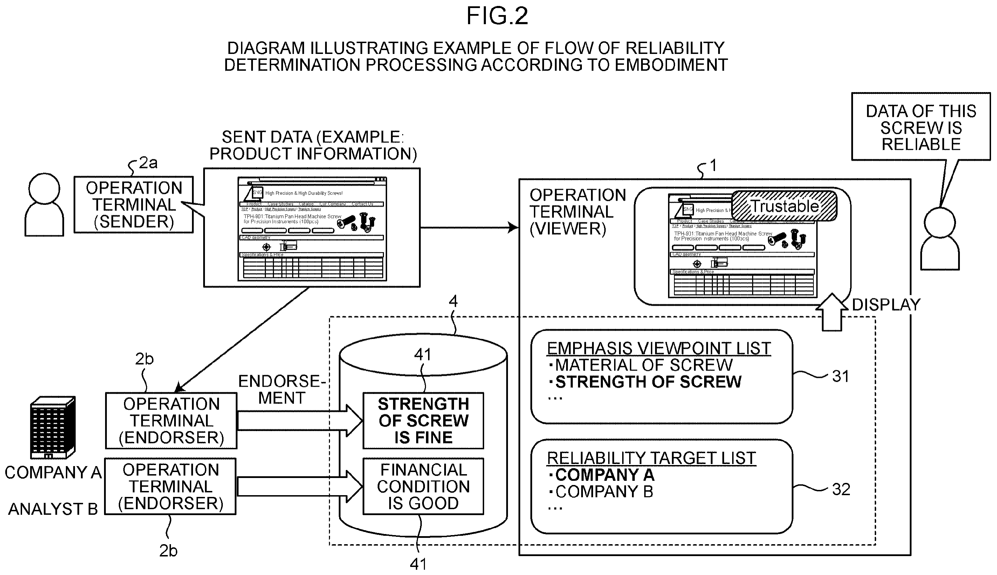

Here, a flow of the reliability determination processing according to the embodiment will be described with reference to FIG. 2. FIG. 2 is a diagram illustrating an example of a flow of reliability determination processing according to the embodiment.

As illustrated in FIG. 2, the operation terminal 1 acquires the sent data uploaded by the sender to a web server on the Internet 7. Then, the operation terminal 1 displays the acquired sent data on the screen. The sent data mentioned here is, for example, data including product information on the screw.

In addition, the operation terminal 1 acquires, from the management server 3, the endorsement data 41 associated with the sent data. One piece of the endorsement data 41 is, for example, data obtained by endorsing a sentence "The strength of the screw is fine." by a company A as an endorser. Another endorsement data 41 is, for example, data in which a document "The financial condition is good." is endorsed by an analyst B, as an endorser. Then, a digital signature generated by each endorser is added to each piece of the endorsement data 41.

Then, the operation terminal 1 determines whether or not the sent data is reliable using an emphasis viewpoint list 31 storing viewpoints emphasized by the viewer and a reliability target list 32 storing people or organizations trusted by the viewer with respect to the acquired endorsement data 41. In the emphasis viewpoint list 31, for example, "material of screw", "strength of screw", and the like are set as emphasis viewpoints of the viewer. In the reliability target list 32, for example, "company A", "company B", and the like are set as the reliability target of the viewer.

For example, "strength of screw" is set in the emphasis viewpoint list 31 and "company A" is set in the reliability target list 32 with respect to the endorsement data 41 including the content of "The strength of the screw is fine." endorsed by the company A. Therefore, the operation terminal 1 determines that the sent data is reliable. That is, regarding the "strength of screw" which is the emphasis viewpoint of the viewer, there is the endorsement data 41 endorsed by the "company A" trusted by the viewer. Therefore, it is determined that the sent data including the product information on the screw is reliable. Then, the operation terminal 1 superimposes and displays, for example, "Trustable" indicating that it is reliable which is the determination result on the screen for browsing the sent data.

As a result, the viewer can easily determine whether or not the sent data is reliable from the determination result for the sent data, for example. In other words, the viewer can quickly determine whether or not the sent data is reliable with respect to the viewpoint (emphasis viewpoint) that the viewer desires to know without checking all the pieces of the endorsement data 41. As a result, the viewer can quickly make a decision (for example, purchase and the like) on the sent data.

### <Functional configuration of operation terminal (viewer)>

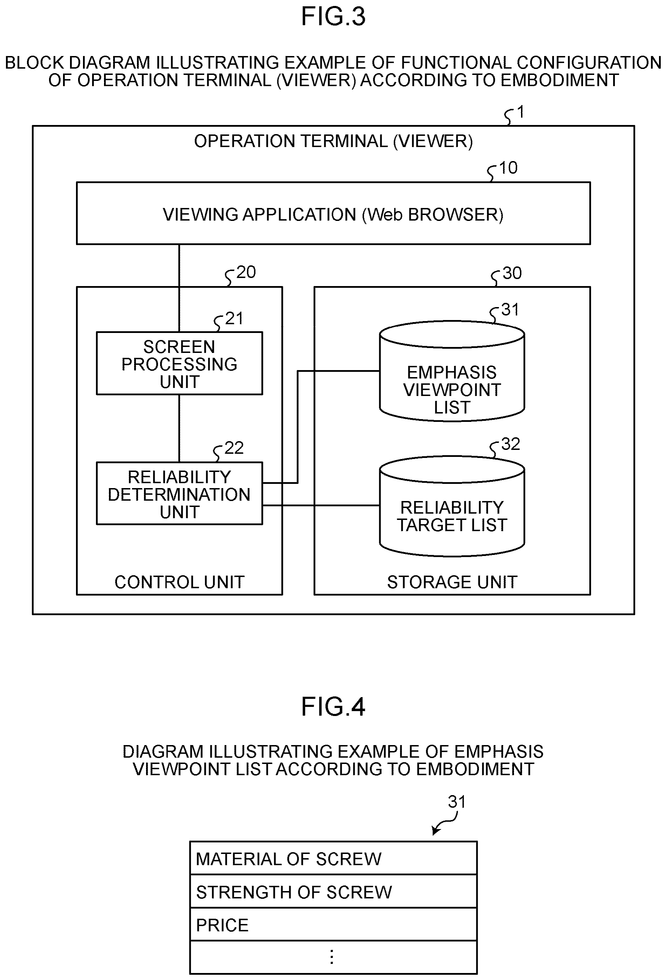

Next, a functional configuration of the operation terminal (viewer) 1 according to the embodiment will be described with reference to FIG. 3. FIG. 3 is a block diagram illustrating an example of a functional configuration of an operation terminal (viewer) according to the embodiment. As illustrated in FIG. 3, the operation terminal (viewer) 1 includes a viewing application 10, a control unit 20, and a storage unit 30.

The viewing application 10 is, for example, a web browser. Examples of the web browser include Google Chrome, Safari, Microsoft Edge, and the like. The viewing application 10 accesses a web server or a cloud via the Internet 7, acquires sender data and the like, and displays the data on the screen of the operation terminal 1.

The storage unit 30 includes the emphasis viewpoint list 31 and the reliability target list 32.

The emphasis viewpoint list 31 is a list in which viewpoints emphasized by the viewer are stored. That is, the emphasis viewpoint list 31 stores viewpoints that are emphasized when the viewer determines whether or not the sent data is reliable. The emphasis viewpoint list 31 may be generated in advance by a viewer or may be added as appropriate. Note that the emphasis viewpoint list 31 may be generated using a user interface (UI) to which the viewer inputs a viewpoint that is emphasized.

The reliability target list 32 is a list in which a person or an organization trusted by the viewer is stored. That is, the reliability target list 32 stores reliability targets that are emphasized when the viewer determines whether or not the sent data is reliable. The reliability target list 32 may be generated in advance by a viewer or may be added as appropriate. Note that the reliability target list 32 may be generated using a UI to which the viewer inputs a reliability target that is emphasized.

Here, an example of the emphasis viewpoint list 31 will be described with reference to FIG. 4. FIG. 4 is a diagram illustrating an example of an emphasis viewpoint list according to the embodiment. As illustrated in FIG. 4, the emphasis viewpoint list 31 stores viewpoints emphasized by the viewer. As an example, the emphasis viewpoint list 31 stores "material of screw", "strength of screw", and "price". Note that the emphasis viewpoint list 31 is not limited to the items, and an arithmetic expression using the items may be stored. An example of the arithmetic expression using the items is "screw strength ≥ nn".

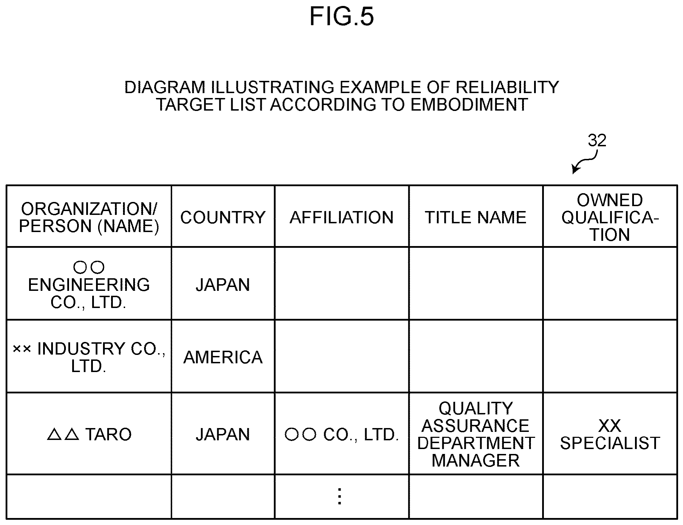

Here, an example of the reliability target list 32 will be described with reference to FIG. 5. FIG. 5 is a diagram illustrating an example of a reliability target list according to the embodiment. As illustrated in FIG. 5, the reliability target list 32 stores, for example, an organization/person (name). In addition, the reliability target list 32 may store, for example, a country, an affiliation, a title name, and an owned qualification in association with each other as attributes of an organization/person (name). As an example, "oo Engineering Co., Ltd." is stored as a reliability target. "Japan" is associated with "oo Engineering Co., Ltd." as an attribute. In addition, "xx Kogyo Co., Ltd." is stored as a reliability target. "America" is associated with "xx Industry Co., Ltd." as an attribute. In addition, "△△ Taro" is stored as a reliability target. "Japan", "oo Co., Ltd.", "Quality assurance department manager", and "XX specialist" are associated with "△△ Taro" as attributes. Note that the items constituting the reliability target list 32 are not limited thereto, and may be added as appropriate.

Returning to FIG. 3, the control unit 20 includes a screen processing unit 21 and a reliability determination unit 22.

The screen processing unit 21 executes screen processing. For example, the screen processing unit 21 displays reliability result information corresponding to the reliability determined by the reliability determination unit 22 to be described later in a superimposed manner on a screen on which the viewer browses the sent data. Examples of the reliability include "high" indicating high reliability, "low" indicating low reliability, and "medium" indicating medium reliability. Note that the reliability is not limited to this, and may be represented by, for example, a numerical value between 0 and 100.

The reliability determination unit 22 determines the reliability of the sent data. For example, the reliability determination unit 22 receives the endorsement data 41 for the sent data from the management server 3. As an example, the reliability determination unit 22 sends, to the management server 3, an acquisition request for the endorsement data 41 including the identification information of the sent data, and receives the endorsement data 41 for the sent data from the management server 3. Then, the reliability determination unit 22 determines the reliability of the sent data with respect to the received endorsement data 41 by using the emphasis viewpoint list 31 and the reliability target list 32. As an example, the reliability determination unit 22 determines whether or not the endorser of the endorsement data 41 matches the reliability target set in the reliability target list 32. In addition, the reliability determination unit 22 determines whether or not the content of the endorsement data 41 matches the viewpoint set in the emphasis viewpoint list 31.

Then, the reliability determination unit 22 determines that the reliability is "high" in a case where the endorser of the endorsement data 41 matches the reliability target set in the reliability target list 32 and the content of the endorsement data 41 matches the viewpoint set in the emphasis viewpoint list 31. This is because the endorser to be trusted is set in the endorsement data 41, and the emphasis viewpoint of the viewer is set in the endorsement data 41. As a result, the viewer can easily determine that the sent data is reliable by viewing the display of the reliability "high". That is, the viewer can quickly determine whether or not the sent data is reliable with respect to the viewpoint emphasized by the viewer himself/herself without checking all the pieces of the endorsement data 41.

Then, the reliability determination unit 22 determines that the reliability is "low" in a case where the endorser of the endorsement data 41 matches the reliability target set in the reliability target list 32 but the content of the endorsement data 41 does not match the viewpoint set in the emphasis viewpoint list 31. This is because even if the endorser to be trusted is set in the endorsement data 41, the emphasis viewpoint of the viewer is not set. As a result, the viewer can easily determine that the sent data is not reliable by viewing the display of the reliability "low". That is, the viewer can quickly determine whether or not the sent data is reliable with respect to the viewpoint emphasized by the viewer himself/herself without checking all the pieces of the endorsement data 41.

Then, the reliability determination unit 22 determines that the reliability is "medium" in a case where the endorser of the endorsement data 41 does not match the reliability target set in the reliability target list 32 but the content of the endorsement data 41 matches the viewpoint set in the emphasis viewpoint list 31. This is because the endorser to be trusted is not set in the endorsement data 41, but the emphasis viewpoint of the viewer is set. As a result, the viewer can easily determine the reliability of the sent data by viewing the display of the reliability "medium". That is, the viewer can quickly determine whether or not the sent data is reliable with respect to the viewpoint emphasized by the viewer himself/herself without checking all the pieces of the endorsement data 41.

Then, the reliability determination unit 22 determines that the reliability is "low" in a case where the endorser of the endorsement data 41 does not match the reliability target set in the reliability target list 32 and the content of the endorsement data 41 does not match the viewpoint set in the emphasis viewpoint list 31. This is because the endorser to be trusted is not set in the endorsement data 41, and the emphasis viewpoint of the viewer is not set. As a result, the viewer can easily determine that the sent data is not reliable by viewing the display of the reliability "low". That is, the viewer can quickly determine whether or not the sent data is reliable with respect to the viewpoint emphasized by the viewer himself/herself without checking all the pieces of the endorsement data 41.

Note that the reliability determination unit 22 may receive the endorsement data 41 for the sent data from the management server 3 again after a lapse of a predetermined time and determine the reliability of the sent data. As a result, the reliability determination unit 22 can change the determination by using the newly added endorsement data 41.

### <Screen image of operation terminal (viewer)>

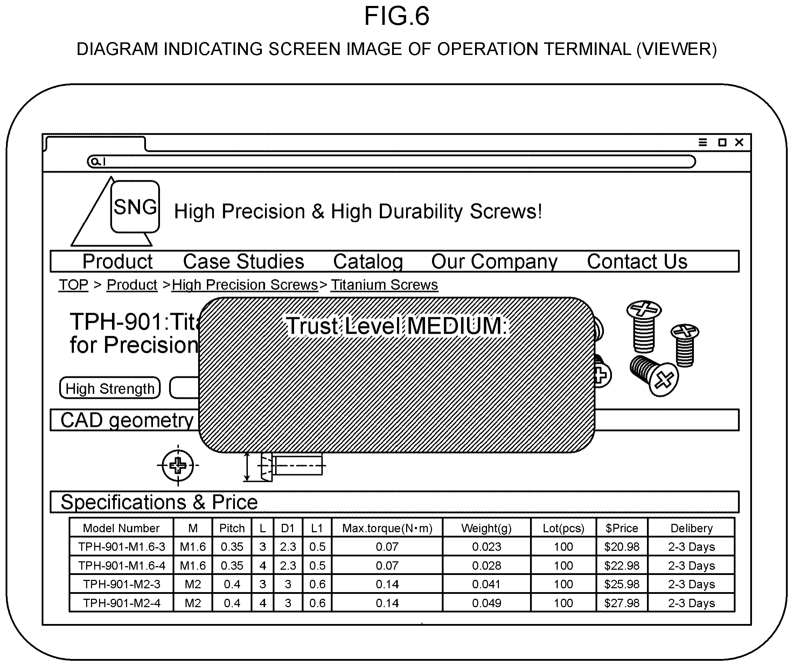

Next, a screen image of the operation terminal (viewer) 1 will be described with reference to FIG. 6. FIG. 6 is a diagram illustrating a screen image of an operation terminal (viewer). Note that it is assumed that the reliability determination unit 22 determines that the reliability is "medium" for the sent data.

As illustrated in FIG. 6, in the operation terminal 1, sent data including product information on the screw is displayed on a screen. Then, "Trust Level Medium" corresponding to the reliability "medium" is superimposed and displayed on the screen on which the sent data is displayed. As a result, the viewer can easily determine whether or not the sent data is reliable by viewing the display of the reliability "medium". That is, the viewer can quickly determine whether or not the sent data is reliable with respect to the viewpoint emphasized by the viewer himself/herself without checking all the pieces of the endorsement data 41.

### <Flowchart of control unit of operation terminal (viewer)>

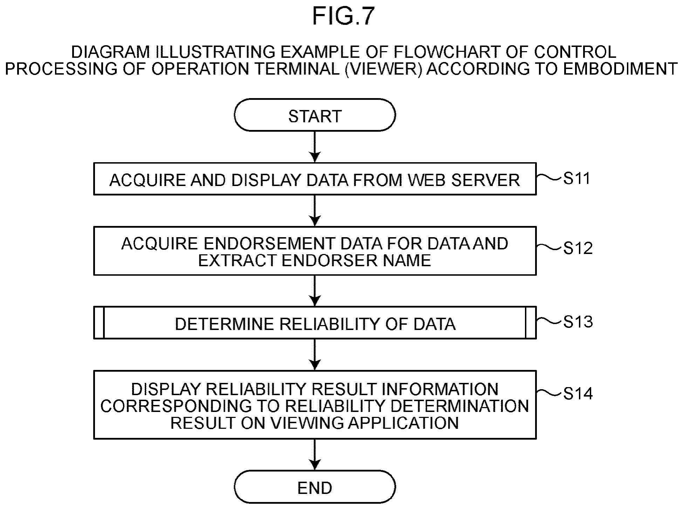

Next, a flowchart of control processing performed by the control unit 20 of the operation terminal (viewer) 1 according to the embodiment will be described with reference to FIG. 7. FIG. 7 is a diagram illustrating an example of a flowchart of control processing of the operation terminal (viewer) according to the embodiment.

As illustrated in FIG. 7, the viewing application 10 acquires the data sent from the web server and displays the acquired data (step S11).

Then, the reliability determination unit 22 acquires the endorsement data 41 corresponding to the acquired data, and extracts the name of the endorser from the acquired endorsement data 41 (step S12). The reliability determination unit 22 determines the reliability of the sent data (step S13). Note that a flowchart of the reliability determination processing performed by the reliability determination unit 22 will be described later.

Then, the screen processing unit 21 displays the reliability result information corresponding to the reliability determination result on the viewing application 10 (step S14). Then, the control processing performed by the control unit 20 ends.

### <Flowchart of reliability determination processing>

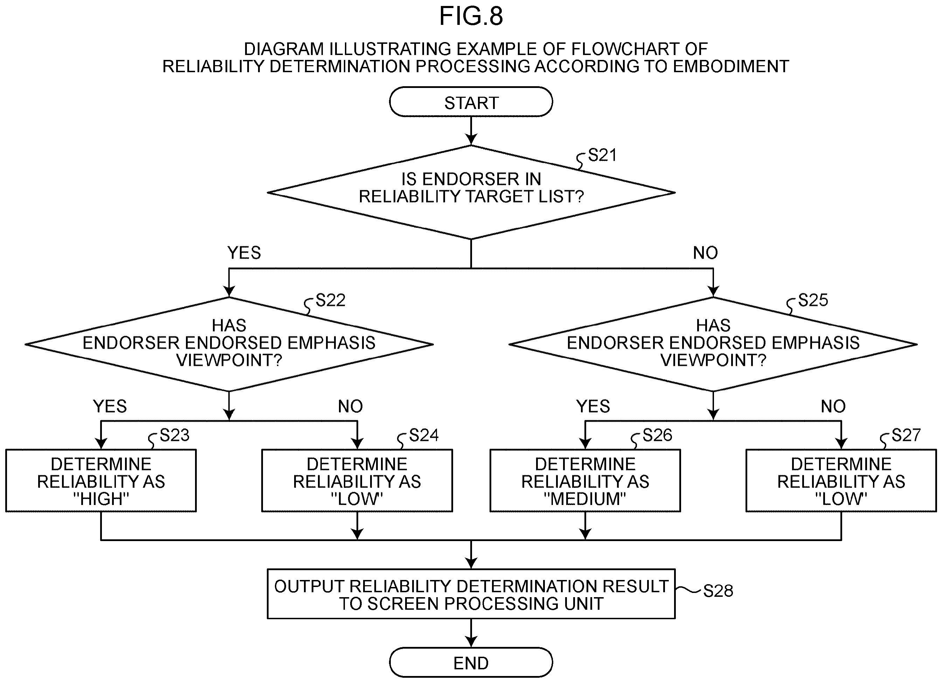

Next, a flowchart of the reliability determination processing performed by the reliability determination unit 22 according to the embodiment will be described with reference to FIG. 8. FIG. 8 is a diagram illustrating an example of a flowchart of reliability determination processing according to the embodiment.

As illustrated in FIG. 8, the reliability determination unit 22 determines whether or not the name of the endorser is in the reliability target list 32 (step S21). That is, the reliability determination unit 22 determines whether or not the name of the endorser of the endorsement data 41 matches the reliability target set in the reliability target list 32. In a case where it is determined that the name of the endorser is in the reliability target list 32 (step S21; Yes), the reliability determination unit 22 determines whether or not the endorser has performed endorsement for the emphasis viewpoint (step S22). That is, the reliability determination unit 22 determines whether or not the content of the endorsement data 41 matches the viewpoint set in the emphasis viewpoint list 31.

In a case where it is determined that the endorser has performed endorsement for the emphasis viewpoint (step S22; Yes), the reliability determination unit 22 determines that the reliability is "high" (step S23). This is because the name of the endorser to be trusted is set in the endorsement data 41, and the emphasis viewpoint of the viewer is set in the endorsement data 41. Then, the reliability determination unit 22 proceeds to step S28.

On the other hand, in a case where it is determined that the endorser has not performed endorsement for the emphasis viewpoint (step S22; No), the reliability determination unit 22 determines that the reliability is "low" (step S24). This is because even if the name of endorser to be trusted is set in the endorsement data 41, the emphasis viewpoint of the viewer is not set. Then, the reliability determination unit 22 proceeds to step S28.

On the other hand, in a case where it is determined that the name of the endorser is not in the reliability target list 32 (step S21; No), the reliability determination unit 22 determines whether or not the endorser has performed endorsement for the emphasis viewpoint (step S25). That is, the reliability determination unit 22 determines whether or not the content of the endorsement data 41 matches the viewpoint set in the emphasis viewpoint list 31. In a case where it is determined that the endorser has performed endorsement for the emphasis viewpoint (step S25; Yes), the reliability determination unit 22 determines that the reliability is "medium" (step S26). This is because the endorser to be trusted is not set in the endorsement data 41, but the emphasis viewpoint of the viewer is set. Then, the reliability determination unit 22 proceeds to step S28.

On the other hand, in a case where it is determined that the endorser has not performed endorsement for the emphasis viewpoint (step S25; No), the reliability determination unit 22 determines that the reliability is "low" (step S27). This is because the endorser to be trusted is not set in the endorsement data 41, and the emphasis viewpoint of the viewer is not set. Then, the reliability determination unit 22 proceeds to step S28.

In step S28, the reliability determination unit 22 outputs the reliability determination result to the screen processing unit 21 (step S28). Then, the reliability determination unit 22 ends the reliability determination processing.

### <Modification>

Next, a modification of the operation terminal (viewer) 1 according to the embodiment will be described. It has been described that the reliability determination unit 22 in the operation terminal (viewer) 1 according to the embodiment determines the reliability of the sent data by using the emphasis viewpoint list 31 and the reliability target list 32 generated in advance by the viewer with respect to the endorsement data 41 for the sent data. When performing the reliability determination of the sent data, the reliability determination unit 22 may further add, to the reliability target list 32, an endorser that has performed endorsement for the emphasis viewpoint set in the emphasis viewpoint list 31 even if the third party is not set in the reliability target list 32. That is, the reliability determination unit 22 may automatically add the reliability target to the reliability target list 32.

For example, the reliability determination unit 22 receives the endorsement data 41 for the sent data from the management server 3. The reliability determination unit 22 determines the reliability of the sent data with respect to the received endorsement data 41 by using the emphasis viewpoint list 31 and the reliability target list 32. As an example, the reliability determination unit 22 determines whether or not the endorser of the endorsement data 41 matches the reliability target set in the reliability target list 32. In addition, the reliability determination unit 22 determines whether or not the content of the endorsement data 41 matches the viewpoint set in the emphasis viewpoint list 31.

Then, the reliability determination unit 22 determines that the reliability is "medium" in a case where the endorser of the endorsement data 41 does not match the reliability target set in the reliability target list 32 but the content of the endorsement data 41 matches the viewpoint set in the emphasis viewpoint list 31. This is because the endorser to be trusted is not set in the endorsement data 41, but the emphasis viewpoint of the viewer is set.

In a case where the reliability is determined to be "medium", as an example, if the viewer has purchased a product or a service described in the sent data, the reliability determination unit 22 adds the name of the endorser of the endorsement data 41 matching the viewpoint to the reliability target list 32. That is, the reliability determination unit 22 may estimate an endorser that has positively performed endorsement for an object purchased by a viewer as a reliability target. Note that whether or not a product or a service has been purchased may be determined using the purchase history data, for example, if the purchase history data is connected.

In addition, in another example, in a case where the reliability is determined to be "medium", the reliability determination unit 22 counts the number of times that the endorser not set in the reliability target list 32 has performed endorsement. Then, the reliability determination unit 22 may add the name of the endorser whose count has reached a certain number of times to the reliability target list 32. That is, the reliability determination unit 22 may estimate an endorser that has performed more endorsements as a reliability target.

As a result, the reliability determination unit 22 automatically adds the reliability target to the reliability target list 32, so that it is possible to save the labor of addition by the viewer and reflect a new endorser. As a result, the reliability determination unit 22 can determine whether or not the sent data is reliable by using the reflected reliability target list 32.

### <Modification of flowchart of reliability determination processing>

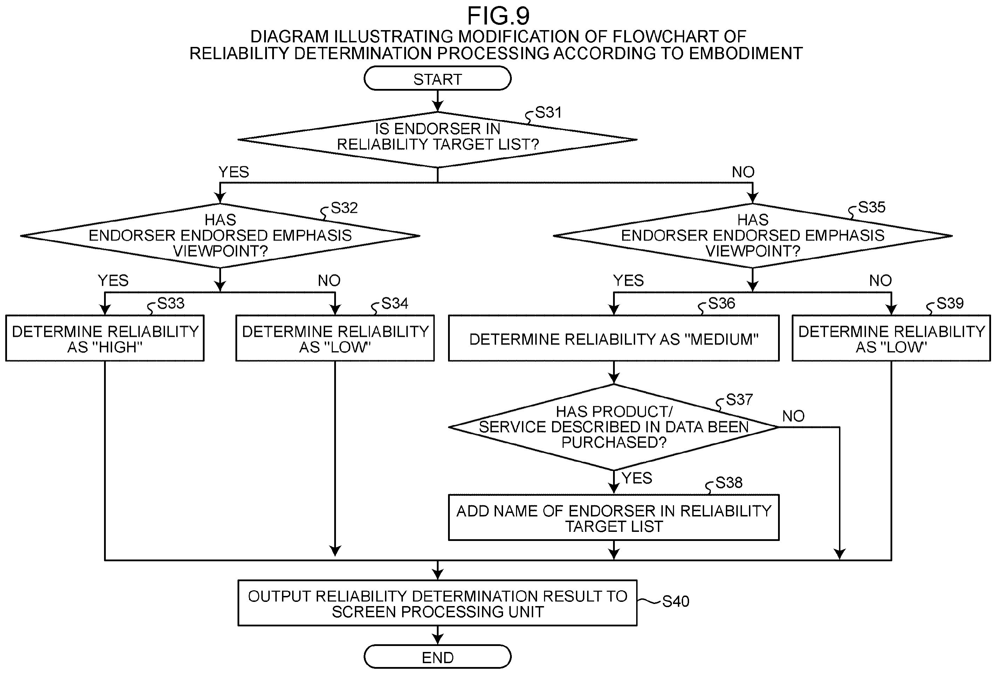

Next, a flowchart of the reliability determination processing performed by the reliability determination unit 22 according to the embodiment will be described with reference to FIG. 9. FIG. 9 is a diagram illustrating a modification of the flowchart of the reliability determination processing according to the embodiment.

As illustrated in FIG. 9, the reliability determination unit 22 determines whether or not the name of the endorser is in the reliability target list 32 (step S31). That is, the reliability determination unit 22 determines whether or not the name of the endorser of the endorsement data 41 matches the reliability target set in the reliability target list 32. In a case where it is determined that the name of the endorser is in the reliability target list 32 (step S31; Yes), the reliability determination unit 22 determines whether or not the endorser has performed endorsement for the emphasis viewpoint (step S32). That is, the reliability determination unit 22 determines whether or not the content of the endorsement data 41 matches the viewpoint set in the emphasis viewpoint list 31.

In a case where it is determined that the endorser has performed endorsement for the emphasis viewpoint (step S32; Yes), the reliability determination unit 22 determines that the reliability is "high" (step S33). This is because the name of the endorser to be trusted is set in the endorsement data 41, and the emphasis viewpoint of the viewer is set in the endorsement data 41. Then, the reliability determination unit 22 proceeds to step S40.

On the other hand, in a case where it is determined that the endorser has not performed endorsement for the emphasis viewpoint (step S32; No), the reliability determination unit 22 determines that the reliability is "low" (step S34). This is because even if the name of endorser to be trusted is set in the endorsement data 41, the emphasis viewpoint of the viewer is not set. Then, the reliability determination unit 22 proceeds to step S40.

On the other hand, in a case where it is determined that the name of the endorser is not in the reliability target list 32 (step S31; No), the reliability determination unit 22 determines whether or not the endorser has performed endorsement for the emphasis viewpoint (step S35). That is, the reliability determination unit 22 determines whether or not the content of the endorsement data 41 matches the viewpoint set in the emphasis viewpoint list 31. In a case where it is determined that the endorser has performed endorsement for the emphasis viewpoint (step S35; Yes), the reliability determination unit 22 determines that the reliability is "medium" (step S36). This is because the endorser to be trusted is not set in the endorsement data 41, but the emphasis viewpoint of the viewer is set.

Then, the reliability determination unit 22 determines whether or not the viewer has purchased the product/service described in the displayed sent data (step S37). For example, the reliability determination unit 22 refers to the purchase history data connected to the operation terminal 1 and determines whether or not the product/service described in the displayed sent data has been purchased. Then, in a case where the reliability determination unit 22 has determined that the viewer has purchased the product/service (step S37; Yes), the reliability determination unit 22 adds the name of the endorser to the reliability target list 32 (step S38). Then, the reliability determination unit 22 proceeds to step S40.

On the other hand, in a case where it is determined that the endorser has not performed endorsement for the emphasis viewpoint (step S35; No), the reliability determination unit 22 determines that the reliability is "low" (step S39). This is because the endorser to be trusted is not set in the endorsement data 41, and the emphasis viewpoint of the viewer is not set. Then, the reliability determination unit 22 proceeds to step S40.

In step S40, the reliability determination unit 22 outputs the reliability determination result to the screen processing unit 21 (step S40). Then, the reliability determination unit 22 ends the reliability determination processing.

### <Effects of embodiment>

According to the above embodiment, the operation terminal 1 displays specific data uploaded on the Internet on the screen. Then, the operation terminal 1 receives the endorsement data 41 indicating the certainty of the specific data. Then, the operation terminal 1 refers to the emphasis viewpoint list 31 that stores the viewpoints emphasized by the viewer who browses the data with respect to the endorsement data 41, and determines the degree of reliability of the specific data. Then, the operation terminal 1 displays information indicating the degree of reliability of the specific data on the screen in a superimposed manner. According to such a configuration, a viewer can easily determine whether or not data on the Internet is reliable.

In addition, according to the above embodiment, the operation terminal 1 refers to the emphasis viewpoint list 31 and the reliability target list 32 storing the name of the organization or person trusted by the viewer with respect to the received endorsement data 41, and determines the degree of reliability of the specific data. According to such a configuration, a viewer can more reliably determine whether or not data on the Internet is reliable.

In addition, according to the above embodiment, the operation terminal 1 determines whether or not the contributor of the endorsement data 41 matches the name of the organization or person stored in the reliability target list 32, and determines whether or not the content of the endorsement data 41 matches the viewpoint stored in the emphasis viewpoint list 31. The operation terminal 1 derives a degree of reliability indicating that specific data is reliable in a case where it is determined that the contributor of the endorsement data 41 matches the name of the organization or person stored in the reliability target list 32 and the content of the endorsement data 41 matches the viewpoint stored in the emphasis viewpoint list 31. Then, the operation terminal 1 displays information indicating the derived degree of reliability on the screen. According to such a configuration, the viewer can easily determine that the sent data is reliable by viewing the information indicating the degree of reliability.

In addition, according to the above embodiment, the operation terminal 1 derives the degree of reliability indicating that the specific data is not reliable in a case where it is determined that the contributor of the endorsement data 41 matches the name of the organization or person stored in the reliability target list 32 but the content of the endorsement data 41 does not match the viewpoint stored in the emphasis viewpoint list 31, or in a case where it is determined that the contributor of the endorsement data 41 does not match the name of the organization or person stored in the emphasis viewpoint list 31 and the content of the endorsement data 41 does not match the viewpoint stored in the emphasis viewpoint list 31. Then, the operation terminal 1 displays information indicating the derived degree of reliability on the screen. According to such a configuration, the viewer can easily determine that the sent data is not reliable by viewing the information indicating the degree of reliability.

In addition, according to the above embodiment, the operation terminal 1 derives a degree of reliability indicating that reliability of the specific data is at the medium level in a case where it is determined that the contributor of the endorsement data 41 does not match the name of the organization or person stored in the reliability target list 32 and the content of the endorsement data 41 matches the viewpoint stored in the emphasis viewpoint list 31. Then, the operation terminal 1 displays information indicating the derived degree of reliability on the screen. According to such a configuration, the viewer can easily determine the reliability of the sent data by viewing the information that the reliability is at the medium level.

In addition, according to the above embodiment, in a case where the derived degree of reliability is at the medium level, the operation terminal 1 adds the name of the contributor of the endorsement data 41 to the reliability target list 32 in a case where there is a purchase history of a product or a service described in specific data. According to such a configuration, the operation terminal 1 can automatically update the reliability target list 32.

### <Others>

Note that, in the above embodiment, it has been described that the reliability determination unit 22 determines the reliability of the sent data using the emphasis viewpoint list 31 and the reliability target list 32 with respect to the endorsement data 41 corresponding to the sent data. However, the reliability determination unit 22 is not limited to this, and may determine the reliability of the sent data by using only the emphasis viewpoint list 31 for the endorsement data 41 corresponding to the sent data.

In addition, in the above embodiment, each component of the illustrated information processing system 9 is not necessarily physically configured as illustrated. That is, a specific aspect of distribution and integration of the operation terminal 1 is not limited to the illustrated one, and all or a part thereof can be functionally or physically distributed and integrated in an arbitrary unit according to various loads, usage conditions, and the like. In addition, the storage unit 30 may be connected via a network as an external device of the operation terminal 1.

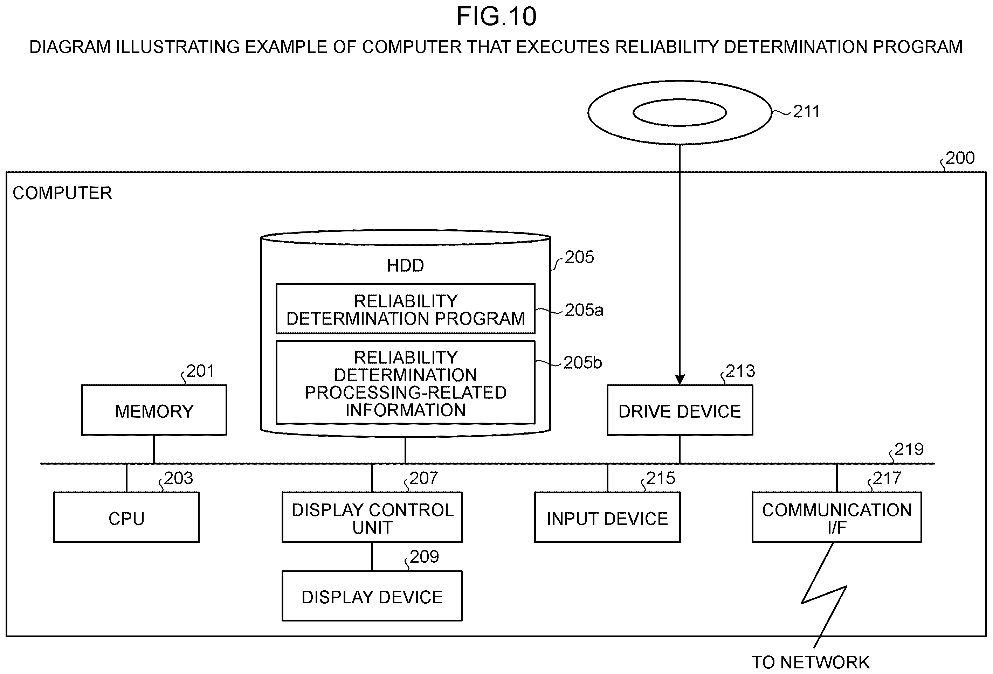

In addition, the various processings described in the above embodiment can be realized by executing a program prepared in advance on a computer such as a personal computer or a workstation. Therefore, an example of a computer that executes a reliability determination program that realizes a function similar to that of the operation terminal 1 illustrated in FIG. 1 will be described below. FIG. 10 is a diagram illustrating an example of a computer that executes a reliability determination program.

As illustrated in FIG. 10, a computer 200 includes a central processing unit (CPU) 203 that executes various types of arithmetic processing, an input device 215 that receives an input of data from a user, and a display device 209. In addition, the computer 200 includes a drive device 213 that reads a program and the like from a storage medium, and a communication interface (I/F) 217 that exchanges data with another computer via a network. In addition, the computer 200 includes a memory 201 that temporarily stores various types of information and a hard disk drive (HDD) 205. Then, the memory 201, the CPU 203, the HDD 205, a display control unit 207, the display device 209, the drive device 213, the input device 215, and the communication I/F 217 are connected by a bus 219.

The drive device 213 is, for example, a device for a removable disk 211. The HDD 205 stores a reliability determination program 205a and reliability determination processing-related information 205b. The communication I/F 217 manages an interface between the network and the inside of the device, and controls input and output of data from another computer. For example, a modem, a LAN adapter, and the like can be adopted as the communication I/F 217.

The display device 209 is a display device that displays data such as a document, an image, and functional information, including a cursor, an icon, or a tool box. As the display device 209, for example, a liquid crystal display, an organic electroluminescence (EL) display, or the like can be adopted.

The CPU 203 reads the reliability determination program 205a, expands the program in the memory 201, and executes the program as a process. Such a process corresponds to each functional unit of the operation terminal 1. The reliability determination processing-related information 205b includes, for example, the emphasis viewpoint list 31 and the reliability target list 32. Then, for example, the removable disk 211 stores each piece of information such as the reliability determination program 205a.

Note that the reliability determination program 205a is not necessarily stored in the HDD 205 from the beginning. For example, the program may be stored in a "portable physical medium" such as a flexible disk (FD), a CD-ROM, a DVD disk, a magneto-optical disk, or an IC card, which are inserted into the computer 200. Then, the computer 200 may read and execute the reliability determination program 205a from these.

Regarding the embodiments including the above examples, the following supplementary notes are further disclosed.
(1) A reliability determination program causing a computer to execute processing of:
   displaying, on a screen, specific data uploaded on the Internet;
   receiving property data indicating certainty of the specific data, and determining a degree of reliability of the specific data with respect to the property data using a first storage unit that stores a viewpoint emphasized by a viewer viewing the data; and
   displaying information indicating the degree of reliability of the specific data on the screen in a superimposed manner.
(2) The reliability determination program according to (1), wherein
   the determining processing refers to the first storage unit and a second storage unit storing a name of an organization or a person trusted by the viewer with respect to the received property data, and determines the degree of reliability of the specific data.
(3) The reliability determination program according to (2), wherein
   the determining processing determines whether or not a contributor of the property data matches a name of an organization or a person stored in the second storage unit and determines whether or not a content of the property data match a viewpoint stored in the first storage unit, and
   derives the degree of reliability indicating that the specific data is reliable in a case where it is determined that the contributor of the property data matches the name of the organization or the person stored in the second storage unit and content of the property data matches the viewpoint stored in the first storage unit, and
   the displaying processing displays information indicating the derived degree of reliability on the screen.
(4) The reliability determination program according to (3), wherein
   the deriving processing derives the degree of reliability indicating that the specific data is not reliable in a case where it is determined that the contributor of the property data matches the name of the organization or the person stored in the second storage unit but the content of the property data does not match the viewpoint stored in the first storage unit, or in a case where it is determined that the contributor of the property data does not match the name of the organization or the person stored in the second storage unit and content of the property data does not match the viewpoint stored in the first storage unit, and
   the displaying processing displays the information indicating the derived degree of reliability on the screen.
(5) The reliability determination program according to (3), wherein
   the deriving processing derives the degree of reliability indicating that the reliability of the specific data is at a medium level in a case where it is determined that the contributor of the property data does not match the name of the organization or the person stored in the second storage unit but the content of the property data matches the viewpoint stored in the first storage unit, and
   the displaying processing displays the information indicating the derived degree of reliability on the screen.
(6) The reliability determination program according to (5), wherein
   the name of the contributor of the property data is added to the second storage unit in a case where there is a purchase history of a product or a service described in the specific data in a case where the derived degree of reliability is at the medium level.
(7) The operation terminal comprising:
   a first display unit that displays, on a screen, specific data uploaded on the Internet;
   a reception unit that receives property data indicating certainty of the specific data;
   a determination unit that determines a degree of reliability of the specific data with respect to the property data using a first storage unit that stores a viewpoint emphasized by a viewer viewing the data; and
   a second display unit that displays information indicating the degree of reliability of the specific data on the screen in a superimposed manner.
(8) A reliability determination method in which a computer executes processing of:
   displaying, on a screen, specific data uploaded on the Internet;
   receiving property data indicating certainty of the specific data, and determining a degree of reliability of the specific data with respect to the property data using a first storage unit that stores a viewpoint emphasized by a viewer viewing the data; and
   displaying information indicating the degree of reliability of the specific data on the screen in a superimposed manner.
(9) An information processing system including an information processing device and an operation terminal capable of accessing the information processing device, wherein the information processing device includes
   a storage unit that stores property data indicating certainty of data uploaded on the Internet, and the operation terminal includes
   a first display unit that displays, on a screen, specific data,
   a reception unit that receives property data indicating certainty of the specific data from the information processing device,
   a determination unit that determines a degree of reliability of the specific data with respect to the property data referring to a first storage unit that stores a viewpoint emphasized by a viewer viewing the data, and
   a second display unit that displays information indicating the degree of reliability of the specific data on the screen in a superimposed manner.

### Explanation of Reference

- 1: OPERATION TERMINAL (VIEWER)
- 2a: OPERATION TERMINAL (SENDER)
- 2b: OPERATION TERMINAL (ENDORSER)
- 3: MANAGEMENT SERVER
- 4: STORAGE DEVICE
- 7: INTERNET
- 10: VIEWING APPLICATION
- 20: CONTROL UNIT
- 21: SCREEN PROCESSING UNIT
- 22: RELIABILITY DETERMINATION UNIT
- 30: STORAGE UNIT
- 31: EMPHASIS VIEWPOINT LIST
- 32: RELIABILITY TARGET LIST
- 41: ENDORSEMENT DATA

## Claims

1. A reliability determination program causing a computer to execute processing of:
displaying, on a screen, specific data uploaded on the Internet;
receiving property data indicating certainty of the specific data, and determining a degree of reliability of the specific data with respect to the property data using a first storage unit that stores a viewpoint emphasized by a viewer viewing the data; and
displaying information indicating the degree of reliability of the specific data on the screen in a superimposed manner.

2. The reliability determination program according to claim 1, wherein
the determining processing refers to the first storage unit and a second storage unit storing a name of an organization or a person trusted by the viewer with respect to the received property data, and determines the degree of reliability of the specific data.

3. The reliability determination program according to claim 2, wherein
the determining processing determines whether or not a contributor of the property data matches a name of an organization or a person stored in the second storage unit and determines whether or not a content of the property data match a viewpoint stored in the first storage unit, and
derives the degree of reliability indicating that the specific data is reliable in a case where it is determined that the contributor of the property data matches the name of the organization or the person stored in the second storage unit and content of the property data matches the viewpoint stored in the first storage unit, and
the displaying processing displays information indicating the derived degree of reliability on the screen.

4. The reliability determination program according to claim 3, wherein
the deriving processing derives the degree of reliability indicating that the specific data is not reliable in a case where it is determined that the contributor of the property data matches the name of the organization or the person stored in the second storage unit but the content of the property data does not match the viewpoint stored in the first storage unit, or in a case where it is determined that the contributor of the property data does not match the name of the organization or the person stored in the second storage unit and content of the property data does not match the viewpoint stored in the first storage unit, and
the displaying processing displays the information indicating the derived degree of reliability on the screen.

5. The reliability determination program according to claim 3, wherein
the deriving processing derives the degree of reliability indicating that the reliability of the specific data is at a medium level in a case where it is determined that the contributor of the property data does not match the name of the organization or the person stored in the second storage unit but the content of the property data matches the viewpoint stored in the first storage unit, and
the displaying processing displays the information indicating the derived degree of reliability on the screen.

6. The reliability determination program according to claim 5, wherein
the name of the contributor of the property data is added to the second storage unit in a case where there is a purchase history of a product or a service described in the specific data in a case where the derived degree of reliability is at the medium level.

7. The operation terminal comprising:
a first display unit that displays, on a screen, specific data uploaded on the Internet;
a reception unit that receives property data indicating certainty of the specific data;
a determination unit that determines a degree of reliability of the specific data with respect to the property data using a first storage unit that stores a viewpoint emphasized by a viewer viewing the data; and
a second display unit that displays information indicating the degree of reliability of the specific data on the screen in a superimposed manner.

8. A reliability determination method in which a computer executes processing of:
displaying, on a screen, specific data uploaded on the Internet;
receiving property data indicating certainty of the specific data, and determining a degree of reliability of the specific data with respect to the property data using a first storage unit that stores a viewpoint emphasized by a viewer viewing the data; and
displaying information indicating the degree of reliability of the specific data on the screen in a superimposed manner.

9. An information processing system including an information processing device and an operation terminal capable of accessing the information processing device, wherein the information processing device includes
a storage unit that stores property data indicating certainty of data uploaded on the Internet, and the operation terminal includes
a first display unit that displays, on a screen, specific data,
a reception unit that receives property data indicating certainty of the specific data from the information processing device,
a determination unit that determines a degree of reliability of the specific data with respect to the property data referring to a first storage unit that stores a viewpoint emphasized by a viewer viewing the data, and
a second display unit that displays information indicating the degree of reliability of the specific data on the screen in a superimposed manner.
